# EUROPEAN PATENT SPECIFICATION

(11) **EP 0 627 829 B1**
(45) Date of publication and mention of the grant of the patent: **05.09.2001**
(21) Application number: 94201344.2
(22) Date of filing: 11.05.1994
(51) Int. Cl.: H04L 7/033, H04L 27/22

(54) **Bit clock recovery for CPFSK signals**
Bittaktrückgewinnung für CPFSK-Signale
Récupération d'horloge pour signaux FSK à phase continue

(30) Priority: 19.05.1993 EP 93201445; 28.06.1993 EP 93201872
(43) Date of publication of application: 07.12.1994
(73) Proprietor: Koninklijke Philips Electronics N.V., 5621 BA Eindhoven (NL)
(72) Inventor: Schuur, Cornelis Christianus Maria, NL-5656 AA Eindhoven (NL)
(74) Representative: Bakker, Hendrik

(56) References cited:
- WO-A-91/07832
- US-A- 4 694 257
- US-A- 4 785 255

## Description

The invention relates to a data terminal comprising a demodulator for a FSK phase-coherent modulated signal having at least two frequencies, which demodulator comprises at least a PLL circuit formed by a phase detector, a filter and a controllable oscillator as well as a logic circuit controllable by a sequencer for extracting digital data from said signal.

The invention specifically relates to a demodulator suitable for use in such a data terminal.

A demodulator suitable for such a data terminal is known from United States Patent 4,694,257 and from "Motorola Semiconductor Technical Data. Advanced Information MC 68194 Carrierband Modem (CBM)", Motorola, 12 February 1986.

A signal according to IEEE Standard 802.4 for the Token Passing Bus method is a FSK (frequency shift keying) phase-coherent modulated sine wave signal in which a "one" is represented by one full cycle per bit period and a "zero" is represented by two full cycles per bit period, while furthermore a non-data symbol is defined which consists of half a "zero" symbol followed by a full "one" symbol terminated by half a "zero" symbol.

With this signal it is possible to transfer data represented by a specific series of "zeros" and "ones". A message is limited by so-called delimiters which contain the non-data symbol "N". In addition to digital data a FSK phase-coherent modulated signal comprises a clock signal which is related to the bit rate. In a demodulator for such a signal the clock signal is recovered from the modulated signal and the data are extracted from that modulated signal.

In the known demodulator both the recovery of the clock signal and the extraction of data are based on the detection of zero crossings in the modulated signal by a phase detector in a phase-locked loop (PLL). A special property of the modulated signal is utilized for the recovery of the clock signal. The modulated signal has not more than two frequencies: once and twice the bit rate. When a zero crossing occurs, the known demodulator generates a one-shot signal having a period of 75% of the one-half bit period. With this one-shot signal half the number of zero crossings (edges) coming from the signal component having the high frequency are masked. The result is a signal having a frequency that is twice the bit rate. By dividing the frequency of this signal by a factor of two, a 50% duty cycle signal is obtained having a frequency equal to the bit rate at which the desired clock signal is recovered.

In the known demodulator the data are extracted from the modulated signal by means of decision time windows: for brief periods of time at instants around 1/4 and 3/4 of a bit period the modulated signal is examined by means of a clock signal for the presence of a zero crossing.

The occurrence of an interference pulse may cause one or several zero crossings in the incoming modulated signal to shift. Since the clock signal is recovered by means of a one-shot pulse activated by a zero crossing, and the zero crossings subsequent to this zero crossing are discarded until this pulse has ended, it may occur that a zero crossing necessary for generating the one-shot pulse is undetected. As a result, the PLL is brought out of the (stable) locked state and the demodulator is again to be synchronized with the modulated incoming signal. A further result of the occurrence of interference is the chance that as a result of the shifts of the zero crossings in the incoming signal the data can no longer be extracted from that signal either.

These drawbacks are all the more annoying, because a demodulator, suitable for data communication signals specified according to the IEEE Standard 802.4 for the Token Passing Bus is particularly intended to be used in an environment for industrial (automated) production, rich in interference sources such as power switches, welding equipment and so on.

It is an object of the invention to provide a data terminal which does not have these drawbacks.

This object is achieved according to the invention in that the phase detector combined with a real-time integrator is arranged as an integrator/phase detector, in that the PLL circuit also comprises the sequencer so that the oscillator output of the controllable oscillator is connected to a control input of the sequencer to drive this sequencer and so that a reference output of the sequencer is connected to a control input of the integrator while the modulated signal is integrated in the integrator/phase detector for a period of time determined by the sequencer.

In a data terminal according to the invention the recovery of the clock signal and the extraction of data from the modulated input signal are also based on the detection of zero crossings. According to the invention this detection is performed, however, by integrating the signal for a period of time in which the zero crossing is expected to take place. Due to the integration the influence of an interference pulse is spread with time, so that the amplitude of this pulse becomes less effective for shifting the zero crossing of the modulated signal, so that in a demodulator according to the invention there is less chance of a zero crossing being undetected.

In an embodiment of a data terminal according to the invention the integrator/phase detector comprises in succession, connected in series and controllable by the sequencer, a switch/modulator, an integrator and a delay circuit.

In this integrator/phase detector not the modulated input signal is integrated, but only the part that results from a multiplication in the switch/modulator of the input signal by a control signal coming from the sequencer, which control signal indicates the integration period. The input signal is sampled in the switch/modulator, so that only the part of the signal that is important for realising a phase lock is processed further, or integrated. After each integration period the sequencer supplies a reset signal to discharge the integrator. The output signal of the integrator has a non-zero mean value even if the input signal of the demodulator is in phase lock. Since this condition complicates the realisation of a phase lock, the output signal of the integrator is not fed back directly to the PLL circuit, but *via* the delay circuit (sample and hold). In the delay circuit the output signal of the integrator is retained after the integration phase has ended, until the integrator has finished a next integration period. The output signal of the delay circuit is formed by periodic pulses which have a zero amplitude in the state of phase lock.

Phase lock with a FSK phase-coherent modulated signal in a demodulator is made possible according to the invention by a real-time integrator driven with a certain frequency by the sequencer.

In a modulated signal specified according to IEEE Standard 802.4 "ones" and "zeros" are represented by sine-shaped signals having a frequency equal to or twice the bit rate, respectively. A signal thus specified can be phase locked by an integrator integrating with a frequency equal to the bit rate the modulated signal around the bit transitions with the zero crossings that occur in the modulated signal. The sequencer may also by coincidence attempt to realise phase lock at the zero crossing in the middle of a bit period. Depending on the contents of the bit involved, this zero crossing has a positive or negative slope.

A phase lock realised thus represents an unstable situation which, however, cannot be cancelled by the PLL circuit: the system is in a deadlock.

The occurrence of this deadlock is avoided by a preferred embodiment of a data terminal comprising a demodulator according to the invention, in which demodulator the sequencer is arranged for producing a reference signal to drive the integrator, the frequency of which reference signal is equal to half the bit rate of the modulated signal as long as the frequency of the output signal of the controllable oscillator is not coupled to the modulated signal frequency and is, for that matter, equal to the bit rate.

This preferred embodiment is compatible with the specifications according to IEEE Standard 802.4 according to which the data in a FSK phase-coherent modulated signal are preceded by a preamble and a delimiter, and the preamble is formed by successive pairs of "zero-one" symbols. If in this demodulator the integrator is driven with a frequency equal to half the bit rate when the preamble in an incoming modulated signal appears, only zero crossings having either a positive or a negative slope will be integrated and the PLL circuit can be brought to a state of lock which does represent a stable situation. Whether the phase of the signal by which the integrator is driven is the right one (that is to say, whether the sign of the slope of the integrated zero crossing corresponds to the sign required for the demodulator) is verified by the logic circuit for data extraction (the data detector). If the phase is not the right one, the sequencer can make the phase of the reference signal for the integrator shift and/or a circuit is provided that is capable of inverting the modulated signal.

The detection of the state of phase lock can be realised by a circuit known *per se* further to be referenced clock detector.

The frequency with which the integrator is driven is doubled once the PLL circuit has reached the stable locked state and thus the occurrence of the unstable deadlock is ruled out. This frequency doubling may be realised in known manner if the sequencer utilizes a modulo-8 counter of which four states are inactivated upon a signal from the lock detector, so that, in effect, a modulo-4 counter remains by which a specific signal in a specific period of time can be sampled twice as fast as was the case before that time.

The digital data are extracted from the modulated signal, as this is done with the known demodulator, by opening the sampling windows at instants around 1/4 and 3/4 of a bit period.

According to the invention the logic circuit for data extraction comprises a data integrator and, connected to the output of this integrator, a comparator which is arranged for assigning to the output signal of the data integrator one of three possible amplitude-determined values per time interval that is determined by the sequencer.

In the data integrator the modulated signal is sampled with a reference signal coming from the sequencer, after which the sampled portions are integrated in the data integrator. In the comparator the output signal of the data integrator is compared with a positive and a negative threshold, it thus being established whether the sampled signal portion has a positive or a negative amplitude or has a zero crossing.

Such a three-level comparator creates an additional possibility to discover certain errors which may occur in the modulated signal. IEEE Standard 802.4 has the ensuing rule that a positive amplitude at one quarter of the bit cycle can only be followed by a negative amplitude after a one-half bit period. Signal distortions frustrating this rule will be identified by this comparator.

The invention will be further explained in the following with reference to the drawings, in which:
Fig. 1 shows the wave patterns in a FSK phase-coherent modulated sine wave according to the IEEE standard 802.4;
Fig. 2 shows a block diagram of a simple embodiment of a PLL circuit in a demodulator according to the invention;
Fig. 3A shows an integrator/phase detector to be used in a data terminal according to the invention;
Fig. 3B shows a plurality of signal shapes as they occur in the integrator/phase detector shown in Fig. 3A; and
Fig. 4 shows a block diagram of an embodiment for a demodulator according to the invention.

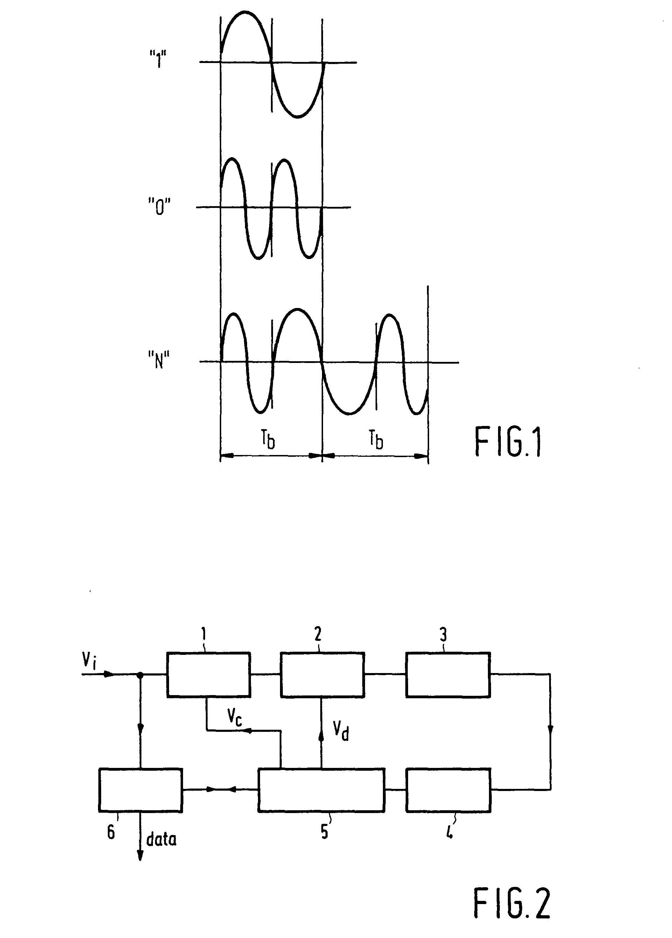

Fig. 1 shows the waveforms in a FSK phase-coherent modulated sine-shaped signal according to IEEE Standard 802.4, with from top to bottom a "one" represented by a sine having frequency 1/Tb, where Tb is the one-bit period, a "zero", represented by a sine having frequency 2/Tb and a non-data symbol formed by a one-half "zero" symbol followed by a "one" symbol and ended by a one-half "zero" symbol.

Fig. 2 shows the block diagram of a simple embodiment for a PLL circuit according to the invention, comprising, in succession, a phase detector (1), an integrator (2), a feedback filter (3), a voltage-controlled oscillator (4) and a sequencer (5), as well as a logic circuit for the extraction of data, the data detector (6).

In the demodulator the clock signal is recovered from the incoming modulated signal Vi by phase locking the latter on an internal clock signal Vc coming from the voltage-controlled oscillator (4) *via* the sequencer (5). Once the phase lock has been established, the data detector (6) is activated by the sequencer (5). As in known demodulators, so is the recovery of the clock signal and the detection of data based on the detection of zero crossings in the signal Vi. According to the invention these zero crossings, however, are detected by integrating the signal Vi in a period of time in which a zero crossing is expected to take place. The integrator (2), together with the phase detector (1) forming the integrator/phase detector, is driven by the sequencer (5) through a reference signal Vd which has a different phase from Vc. Fig. 2 further shows an analog loop filter (3) known *per se*, comprising, for example, a simple RC-circuit.

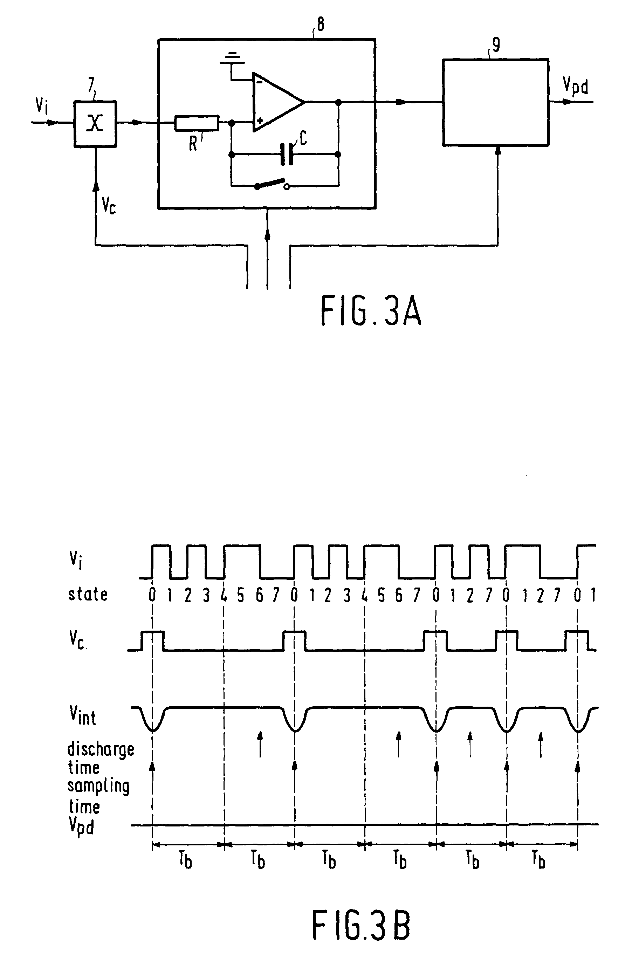

Fig. 3A shows an integrator/phase detector comprising a switch/modulator (7), an integrator (8) and a delay circuit (sample and hold) (9). The integrator does not process the complete input signal Vi but only the result of the process in which Vi is multiplied in the switch/modulator (7) by a pulse signal coming from the sequencer, which pulse signal covers the integration period.

Fig. 3B shows the signal shapes and instants respectively, occurring in this integrator/phase detector as follows from top to bottom:
- an input signal having passed a bandpass filter and a limiter, in this example part of a preamble formed by six bit periods comprising each alternately a "zero" and a "one", which signal determines the count of the modulo-8 counter in the sequencer (not shown here) which drives this integrator/phase detector,
- the signal Vc which determines the integration period and comes from the sequencer,
- the output signal of the integrator,
- the instants at which the output signal of the integrator (8) is stored (long arrows) in the delay circuit (9) in response to a signal from the sequencer,
- the instants at which the integrator (8) is discharged (short arrows) in response to a signal from the sequencer,
- the output signal Vpd of the phase detector.

In this example the signal Vc derived from the internal clock (in this case the voltage-controlled oscillator) is already in synchronism with Vi, which also appears from the symmetrical shape of the integrator output signal Vint. After the fourth period Tb in the drawing Figure the PLL circuit changes to the lock mode. In the modulo-8 counter of the sequencer four states are omitted due to which, in effect, a modulo-4 counter has arisen, so that the integration period is shortened by a factor of two. In the lock mode the signal is integrated with a frequency equal to the bit rate. The output signal of the integrator (8) is formed by pulses and has, as in the lock mode, a non-zero mean value. Since this is an undesirable situation for the proper operation of a PLL circuit, the output signal of the integrator is not directly fed back to the PLL loop. Instead, the output signal of the integrator is used by a delay circuit (sample and hold) directly after an integration period. The delay circuit, and hence the integrator/phase detector, has thus obtained an output signal changing step-by-step *in lieu of* a pulsed output signal.

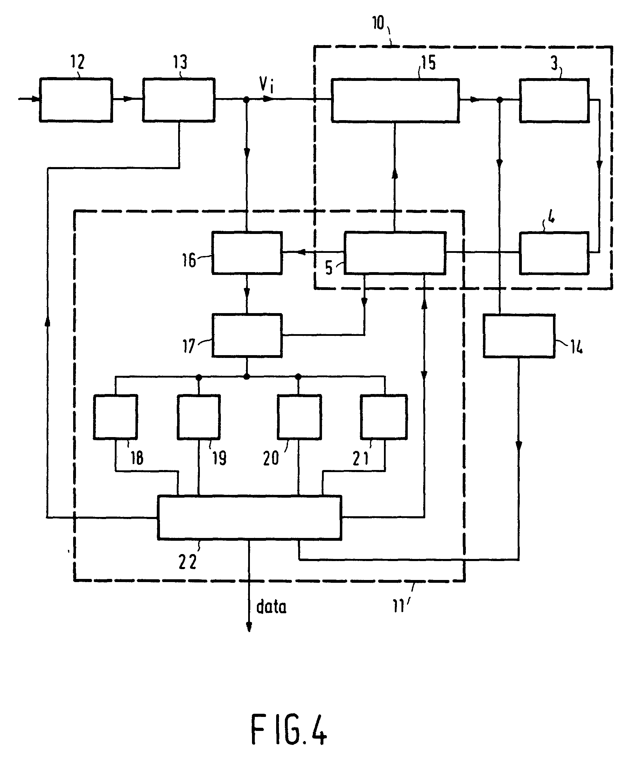

Fig. 4 shows a block diagram of a demodulator according to the invention, mainly formed by a PLL circuit (10) and a logic circuit for extracting digital data (11), (the data detector). The demodulator further includes an analog bandpass filter (12) and a limiter (13) combined with an inverter (not shown) and a PLL lock detector (14). Bandpass filter and limiter are known *per se*.

The PLL circuit (10) comprises an integrator/phase detector (15), a loop filter (3), a voltage-controlled oscillator (4) and a sequencer (5). The operation of the PLL circuit has been explained above with reference to the Figs. 2 and 3.

The PLL lock detector (14) indicates when the phase of the modulated input signal Vi is locked. The PLL lock detector is used by way of example by a circuit in which the absolute value of the output signal of the integrator/phase detector (15) is compared with a threshold. If the absolute value is smaller than this threshold, the output signal of the comparator is a logic "one", otherwise a logic "zero". To exclude erroneous states of lock, three successive logic "ones" are to be detected before the lock detector may denote the state of lock. Therefore, a shift register is included having three successive registers (not shown), combined with a 3-input AND circuit (not shown either). The shift register is driven by the sequencer (5).

The sequencer (5) takes up a central position in both the PLL circuit (10) and the data detector (11). This sequencer controls the instants at which all the signal processes in the PLL circuit and the data detector are carried out.

The data detector (11) comprises, in succession, a data integrator (16), a comparator (17), four registers (18 to 21 incl.) and a logic decision circuit (22).

In the data integrator (16) the modulated input signal Vi is integrated after being multiplied by a sampling signal coming from the sequencer (5). This multiplication provides that only the signal portions at instants around 1/4 and 3/4 of a complete bit period are processed, thus the portions which in conformity with IEEE Standard 802.4 carry the data. The output signal of the data integrator (16) is applied to a comparator (17) which here distinguishes three signal levels: one level above a positive threshold, one level below a negative threshold and one level between the two thresholds. An input signal of which, in succession, two amplitudes are detected to have the same polarity is in conflict with IEEE Standard 802.4 and can therefore be detected as erroneous. Before the PLL circuit has reached the state of lock, the four registers (18 to 21 incl.) are all used for storing the output signal of the comparator (17) per integration period, while the decision circuit (22) activates the registers. After the phase lock has materialized, the integration period is halved and the use of two of the four registers is sufficient. The data ("data") extracted from the modulated input signal and the recovered clock signal ("data clock") become available on the outputs of respectively the decision circuit (22) and the sequencer (5).

## Claims

1. Data terminal comprising a demodulator for a FSK phase-coherent modulated signal having at least two frequencies, which demodulator comprises at least a PLL circuit (10) formed by a phase detector (1), a filter (3) and a controllable oscillator (4) as well as a logic circuit (6) controllable by a sequencer (5) for extracting digital data from said signal, **characterized in that** the phase detector (1) combined with a real-time integrator (2) is arranged as an integrator/phase detector (15), in that the PLL circuit (10) also comprises the sequencer (5) so that the oscillator output of the controllable oscillator (4) is connected to a control input of the sequencer (5) to drive this sequencer and so that a reference output of the sequencer (5) is connected to a control input of the integrator (2) while the modulated signal is integrated in the integrator/phase detector (15) for a period of time determined by the sequencer (5).

2. Data terminal as claimed in Claim 1, **characterized in that** the integrator/phase detector (15) comprises in succession, connected in series and controllable by the sequencer (5), a switch/modulator (7), an integrator (8) and a delay circuit (9).

3. Data terminal as claimed in Claim 1, **characterized in that** the sequencer (5) is arranged for producing a reference signal to drive the integrator (2), the frequency of which reference signal is equal to half the bit rate of the modulated signal as long as the frequency of the output signal of the controllable oscillator (4) is not coupled to the modulated signal frequency and is, for that matter, equal to the bit rate.

4. Data terminal as claimed in one of the preceding Claims, **characterized in that** the PLL circuit (10) comprises an inverter circuit for inverting the input signal of the phase detector (1) or integrator (2).

5. Data terminal as claimed in one or more of the preceding Claims, **characterized in that** the logic circuit (6) for data extraction comprises a data integrator (16) and, connected to the output of this integrator, a comparator (17) which is arranged for assigning to the output signal of the data integrator one of three possible amplitude-determined values per time interval that is determined by the sequencer (5).

6. Demodulator for a FSK phase-coherent modulated signal having at least two frequencies, which demodulator comprises at least a PLL circuit (10) formed by a phase detector (1), a filter (3) and a controllable oscillator (4) as well as a logic circuit (6) controllable by a sequencer (5) for extracting digital data from said signal, **characterized in that** the phase detector (1) combined with a real-time integrator (2) is arranged as an integrator/phase detector (15), in that the PLL circuit (10) also comprises the sequencer (5) so that the oscillator output of the controllable oscillator (4) is connected to a control input of the sequencer (5) to drive this sequencer and so that a reference output of the sequencer (5) is connected to a control input of the integrator (2) while the modulated signal is integrated in the integrator/phase detector (15) for a period of time determined by the sequencer (5).

7. Demodulator as claimed in Claim 6, **characterized in that** the integrator/phase detector (15) comprises in succession, connected in series and controllable by the sequencer (5), a switch/modulator (7), an integrator (8) and a delay circuit (9).

8. Demodulator as claimed in Claim 6, **characterized in that** the sequencer (5) is arranged for producing a reference signal to drive the integrator (2), the frequency of which reference signal is equal to half the bit rate of the modulated signal as long as the frequency of the output signal of the controllable oscillator (4) is not coupled to the modulated signal frequency and is, for that matter, equal to the bit rate.

9. Demodulator as claimed in one of the Claims 6 to 8, **characterized in that** the PLL circuit (10) comprises an inverter circuit for inverting the input signal of the phase detector (1) or integrator (2).

10. Demodulator as claimed in one or more of the Claims 6 to 9, **characterized in that** the logic circuit (6) for data extraction comprises a data integrator (16) and, connected to the output of this integrator, a comparator (17) which is arranged for assigning to the output signal of the data integrator one of three possible amplitude-determined values per time interval that is determined by the sequencer (5).

## Patentansprüche

1. Datenendstelle mit einem Demodulator für ein FSK-phasenkohärent moduliertes Signal mit wenigstens zwei Frequenzen, wobei dieser Demodulator wenigstens eine durch einen Phasendetektor (1), ein Filter (3) und einen steuerbaren Oszillator (4) gebildete PLL-Schaltung (10) aufweist, sowie eine logische Schaltung (6), die durch einen Sequenzer (5) steuerbar ist zum Extrahieren digitaler Daten aus dem genannten Signal, **dadurch gekennzeichnet**, dass der Phasendetektor (1) in Kombination mit einem Echtzeitintegrator (2) als Integrator/Phasendetektor (15) vorgesehen ist, dass die PLL-Schaltung (10) ebenfalls den Sequenzer (5) aufweist, so dass der Oszillatorausgang des steuerbaren Oszillators (4) mit einem Steuereingang des Sequenzers (5) verbunden ist zum Betreiben dieses Sequenzers und dass ein Bezugsausgang des Sequenzers (5) mit einem Steuereingang des Integrators (2) verbunden ist, während das modulierte Signal in dem Integrator/Phasendetektor (15) eine Periode lang von dem Sequenzer (5) integriert wird, wobei diese Periode durch den Sequenzer bestimmt wird.

2. Datenendstelle nach Anspruch 1, **dadurch gekennzeichnet**, dass der Integrator/Phasendetektor (15) nacheinander, in Reihe verbunden und von dem Sequenzer (5) steuerbar einen Schalter/Modulator (7), einen Integrator (8) und eine Verzögerungsschaltung (9) aufweist.

3. Datenendstelle nach Anspruch 1, **dadurch gekennzeichnet**, dass der Sequenzer (5) vorgesehen ist zum Erzeugen eines Bezugssignals zum Betreiben des Integrators (2), wobei die Frequenz dieses Bezugssignals der halben Bitrate des modulierten Signals entspricht, solange die Frequenz des Ausgangssignals des steuerbaren Oszillators (4) nicht mit der Frequenz des modulierten Signals gekoppelt ist, und dazu der Bitrate entspricht.

4. Datenendstelle nach einem der vorstehenden Ansprüche **dadurch gekennzeichnet**, dass die PLL-Schaltung (10) eine Inverterschaltung aufweist zum Invertieren des Eingangssignals des Phasendetektors (I) oder des Integrators (2).

5. Datenendstelle nach einem der vorstehenden Ansprüche, **dadurch gekennzeichnet**, dass die logische Schaltung (6) zur Datenextraktion einen Datenintegrator (16) aufweist, sowie, mit dem Ausgang dieses Integrators verbunden, eine Vergleichsschaltung (17), die dazu vorgesehen ist, dem Ausgangssignal des Datenintegrators einen von drei möglichen amplitudenbestimmten Werten je durch den Sequenzer (5) bestimmtes Zeitintervall zuzuordnen.

6. Demodulator für ein FSK phasenkohärent moduliertes Signal mit wenigstens zwei Frequenzen, wobei der Demodulator wenigstens eine durch einen Phasendetektor (1), ein Filter (3) und einen steuerbaren Oszillator (4) gebildete PLL-Schaltung (10), sowie eine von einem Sequenzer (5) steuerbare logische Schaltung (6) aufweist zum Extrahieren digitaler Daten aus dem genannten Signal, **dadurch gekennzeichnet**, dass dieser Phasendetektor (1) in Kombination mit einem Echtzeitintegrator (2) als ein Integrator/Phasendetektor (15) vorgesehen ist, dass die PLL-Schaltung (10) ebenfalls den Sequenzer (5) aufweist, so dass der Oszillatorausgang des steuerbaren Oszillators (4) mit einem Steuereingang des Sequenzers (5) verbunden ist zum Betreiben dieses Sequenzers und so dass ein Bezugsausgang des Sequenzers (5) mit einem Steuereingang des Integrators (2) verbunden ist, während das modulierte Signal eine durch den Sequenzer (5) bestimmte Zeitperiode in dem Integrator/Phasendetektor (15) integriert wird.

7. Demodulator nach Anspruch 6, **dadurch gekennzeichnet**, dass der Integrator/Phasendetektor (15) nacheinander, in Reihe verbunden und von dem Sequenzer (5) steuerbar, einen Schaltter/Modulator (7), einen Integrator (8) und eine Wiedergabeschaltung (9) aufweist.

8. Demodulator nach Anspruch 6, **dadurch gekennzeichnet**, dass der Sequenzer (5) dazu vorgesehen ist, ein Bezugssignal zum Betreiben des Integrators (2) zu schaffen, wobei die Frequenz dieses Bezugssignals der halben Bitrate des modulierten Signals entspricht, solange die Frequenz des Ausgangssignals des steuerbaren Oszillators (4) nicht mit der Frequenz des modulierten Signals gekoppelt ist und dazu der Bitrate entspricht.

9. Demodulator nach einem der Ansprüche 6 bis 8, **dadurch gekennzeichnet**, dass die PLL-Schaltung (10) eine Inverterschaltung aufweist zum Invertieren des Eingangssignals des Phasendetektors (1) oder des Integrators (2).

10. Demodulator nach einem der Ansprüche 6 bis 9, **dadurch gekennzeichnet**, dass die logische Schaltung (6) zur Datenextraktion einen Datenintegrator (16) und, verbunden mit dem Ausgang dieses Integrators, eine Vergleichsschaltung (17) aufweist, die dazu vorgesehen ist, dem Ausgangssignal des Datenintegrators einen von drei möglichen amplitidenbestimmten Werten je durch den Sequenzer (5) bestimmtes Zeitintervall zuzuordnen.

## Revendications

1. Terminal de données comprenant un démodulateur pour un signal modulé FSK à cohérence de phase présentant au moins deux fréquences, lequel démodulateur comprend au moins un circuit PLL (10) formé par un détecteur de phase (1), un filtre (3) et un oscillateur pouvant être commandé (4) ainsi qu'un circuit logique (6) pouvant être commandé par un séquenceur (5) pour extraire des données numériques dudit signal, **caractérisé en ce que** le détecteur de phase (1) combiné à un intégrateur en temps réel (2) est agencé sous la forme d'un intégrateur/détecteur de phase (15), en ce que le circuit PLL (10) comprend également le séquenceur (5) de sorte que la sortie d'oscillateur de l'oscillateur pouvant être commandé (4) est reliée à une entrée de commande du séquenceur (5) pour entraîner ce séquenceur et de sorte qu'une sortie de référence du séquenceur (5) est reliée à une entrée de commande de l'intégrateur (2) tandis que le signal modulé est intégré à l'intégrateur/détecteur de phase (15) pendant un laps de temps déterminé par le séquenceur (5).

2. Terminal de données suivant la revendication 1, **caractérisé en ce que** l'intégrateur/détecteur de phase (15) comprend successivement, reliés en série et pouvant être commandés par le séquenceur (5), un commutateur/modulateur (7), un intégrateur (8) et un circuit à retard (9)

3. Terminal de données suivant la revendication 1, **caractérisé en ce que** le séquenceur (5) est agencé pour produire un signal de référence pour entraîner l'intégrateur (2), signal de référence dont la fréquence est égale à la moitié du débit binaire du signal modulé aussi longtemps que la fréquence du signal de sortie de l'oscillateur pouvant être commandé (4) n'est pas couplée à la fréquence de signal modulé et est, à cet égard, égale au débit binaire.

4. Terminal de données suivant l'une quelconque des revendications précédentes, **caractérisé en ce que** le circuit PLL (10) comprend un circuit inverseur pour inverser le signal d'entrée du détecteur de phase (1) ou de l'intégrateur (2).

5. Terminal de données suivant une ou plusieurs des revendications précédentes, **caractérisé en ce que** le circuit logique (6) pour l'extraction de données comprend un intégrateur de données (16) et, relié à la sortie de cet intégrateur, un comparateur (17) qui est agencé pour attribuer au signal de sortie de l'intégrateur de données une de trois valeurs déterminées en amplitude possibles par intervalle de temps qui est déterminée par le séquenceur (5).

6. Démodulateur pour un signal modulé FSK à cohérence de phase présentant au moins deux fréquences, lequel démodulateur comprend au moins un circuit PLL (10) formé par un détecteur de phase (1), un filtre (3) et un oscillateur pouvant être commandé (4) ainsi qu'un circuit logique (6) pouvant être commandé par un séquenceur (5) pour extraire des données numériques dudit signal, **caractérisé en ce que** le détecteur de phase (1) combiné à un intégrateur en temps réel (2) est agencé sous la forme d'un intégrateur/détecteur de phase (15), en ce que le circuit PLL (10) comprend également le séquenceur (5) de sorte que la sortie d'oscillateur de l'oscillateur pouvant être commandé (4) est reliée à une entrée de commande du séquenceur (5) pour entraîner ce séquenceur et de sorte qu'une sortie de référence du séquenceur (5) est reliée à une entrée de commande de l'intégrateur (2) tandis que le signal modulé est intégré à l'intégrateur/détecteur de phase (15) pendant un laps de temps déterminé par le séquenceur (5).

7. Démodulateur suivant la revendication 6, **caractérisé en ce que** l'intégrateur/détecteur de phase (15) comprend successivement, reliés en série et pouvant être commandés par le séquenceur (5), un commutateur/modulateur (7), un intégrateur (8) et un circuit à retard (9).

8. Démodulateur suivant la revendication 6, **caractérisé en ce que** le séquenceur (5) est agencé pour produire un signal de référence pour entraîner l'intégrateur (2), signal de référence dont la fréquence est égale à la moitié du débit binaire du signal modulé aussi longtemps que la fréquence du signal de sortie de l'oscillateur pouvant être commandé (4) n'est pas couplée à la fréquence de signal modulé et est, à cet égard, égale au débit binaire.

9. Démodulateur suivant l'une quelconque des revendications 6 à 8, **caractérisé en ce que** le circuit PLL (10) comprend un circuit inverseur pour inverser le signal d'entrée du détecteur de phase (1) ou de l'intégrateur (2).

10. Démodulateur suivant une ou plusieurs des revendications 6 à 9, **caractérisé en ce que** le circuit logique (6) pour l'extraction de données comprend un intégrateur de données (16) et, relié à la sortie de cet intégrateur, un comparateur (17) qui est agencé pour attribuer au signal de sortie de l'intégrateur de données une de trois valeurs déterminées en amplitude possibles par intervalle de temps qui est déterminée par le séquenceur (5).
